# EUROPEAN PATENT APPLICATION

(11) **EP 0 725 551 A1**
(43) Date of publication of application: **07.08.1996**
(21) Application number: 96200237.4
(22) Date of filing: 02.02.1996
(51) Int. Cl.: H04Q 7/32

(54) **Method and transceiver for optionally establishing a connection to a first or second telecommunication system**

(30) Priority: 02.02.1995 NL 9500192
(71) Applicant: Koninklijke PTT Nederland N.V., NL-2509 CH The Hague (NL)
(72) Inventor: Brinkgreve, Michel Jeroen, 2512 JP Den Haag (NL); Mettes, Herman Frans, NL-3328 RD Dordrecht (NL)
(74) Representative: van Bommel, Jan Peter

(57) **Abstract**

By tuning a transceiver device, such as a walkie-talkie or radiotelephone, which communicates with a first system which uses a signalling channel for transmitting, during a first time interval, system information, such as synchronisation information, and for transmitting, during a second time interval, users' information such as call information, and which uses speech channels for the actual communication, during the first time interval to another frequency channel associated with another system, it is achieved that the transceiver device is capable of being approached from both systems, namely, without call information transmitted by the first system via the first frequency channel needing to be lost during the second time interval. Furthermore, further call information to be transmitted by the second system via the second frequency channel may then simply be defined in such a manner that said further call information need not be lost either.

## Description

### A. BACKGROUND OF THE INVENTION

The invention relates to a transceiver device comprising:
- transceiver means for transmitting/ receiving, in response to a first control signal, information via a first frequency channel and for transmitting/ receiving, in response to a second control signal, information via a second frequency channel, and
- detection means coupled to the transceiver means for detecting, during a first time interval, system information to be received via the first frequency channel and via the transceiver means, and for detecting, during a second time interval, user information to be received via the first frequency channel and via the transceiver means.

Such a transceiver device is generally known and relates, e.g., to a radiotelephone or walkie-talkie communicating with a first system. Such transceiver device disposes of the transceiver means, which are usually implemented in the form of a transceiver coupled to an antenna. Such transceiver is tuned, via the first control signal, to the first frequency channel and is tuned, via the second control signal, to the second frequency channel. The transceiver device further disposes of the detection means which are, e.g., implemented in the form of a combination of a converter coupled to the transceiver for converting information arriving via the antenna and the transceiver into binary pulses, and a processor coupled to the converter for processing such binary pulses. The first frequency channel associated with the first system is, e.g., a so-called signalling channel, with system information being transmitted during the first time interval and user information being capable of being transmitted during the second time interval. In general, both time intervals will be consecutive and will periodically succeed one another. The system information relates to, e.g., synchronisation information and identification information of a transmitting base station, and the user information relates to, e.g., call information or channel-selection information for a certain transceiver device or acknowledgement information of a certain transceiver device. Such call information and channel-selection information and acknowledgement information of course always comprise identification information of that specific transceiver device. The second frequency channel also associated, in this example, with the first system is, e.g., a so-called speech channel.

When, from the first system, a first telecommunication connection should be established with the transceiver device, there is first transmitted, via the first frequency channel, call information situated within the second time interval from the base station to the transceiver device, which receives and detects such call information as a result of the transceiver device being in synchronisation with the base station thanks to the system information situated inside the first time interval, which is transmitted from the base station to the transceiver device via the first frequency channel. Subsequently, the transceiver device transmits, via the first frequency channel, acknowledgement information situated inside the second time interval to the base station which, in response thereto, selects the second frequency channel and informs the transceiver device of this selection via the first frequency channel by means of channel-selection information situated within a further second time interval. Thereafter, e.g., a speech connection is established via the second frequency channel between the first system and the transceiver device.

Such a known transceiver device has the drawback, inter alia, that it is not possible therewith to establish, from a second system, a second telecommunication connection with the same transceiver device, unless a further transceiver is placed in the transceiver device.

### B. SUMMARY OF THE INVENTION

One of the objects of the invention is to provide a transceiver device of the type referred to in the preamble with which, from the first system, a first telecommunication connection may be established with the transceiver device and with which, from the second system, a second telecommunication connection may be established with the same transceiver device, without a further transceiver having to be placed in the transceiver device.

For this purpose, the transceiver device according to the invention is characterised in that the transceiver device is provided with:
- generating means coupled to the transceiver means and to the detection means for generating the second control signal in dependence of detected information for receiving, during at least a section of the first time interval, further information to be received via the second frequency channel and via the transceiver means.

By generating, via the generating means, the second control signal as a function of detected information for receiving, during at least a section of the first time interval, further information to be received via the second frequency channel and via the transceiver means, it is achieved that further call information for the transceiver device transmitted via the second frequency channel is capable of actually being received and detected by the transceiver device. Here, the second frequency channel then belongs to the second system, although of course it is also possible that the second frequency channel continues to belong to the first system in the form of, e.g., a speech channel together with, e.g., a third up to and including a ninth frequency channel, with the second system then having to transmit, via, e.g., a tenth frequency channel, further call information to the transceiver device, which should then generate a tenth control signal as a function of detected information for receiving, during at least a section of the first time interval, further information to be received via the tenth frequency channel and via the transceiver means.

Thus, the option has been created of establishing, both from the first system and from the second system, a telecommunication connection with the transceiver device according to the invention, in which the call information to be received via the first frequency channel - such as, e.g., the signalling channel - and associated with the user information, need never be lost. This is the result of generating, by the generating means, the second control signals as a function of and, e.g., synchronised with, information arrived and detected via the first frequency channel, such as, e.g., the system information, as a result of which, only during at least a section of the first time interval, the further information to be received via the second frequency channel - such as, e.g., further call information - may be received. Such further call information is, e.g., a tone or code to be transmitted by the second system via the second frequency channel, to which a user of the transceiver device according to the invention subsequently reacts, e.g., by means of speech, with a speech connection then immediately being realised via this second frequency channel.

The invention is based, inter alia, on the insight that, when system information is transmitted via a first frequency channel during a first time interval, and user information is capable of being transmitted during a second time interval, a second frequency channel may be investigated during at least a section of such first time interval, by the same transceiver device, for possible further call information, without - in this case - the danger that call information to be transmitted via the first frequency channel during the second time interval is lost.

Thus, the problem of being capable of establishing both from a first system a first telecommunication connection with a transceiver device as well as of being capable of establishing from a second system a second telecommunication connection with the same transceiver device, without a further transceiver having to be placed in the transceiver device, is solved by receiving, during at least a section of the first time interval, further information via the second frequency channel, for which purpose generating means are applied for generating a second control signal as a function of information received and detected via the first frequency channel for, in response to the second control signal, tuning the only available transceiver to the second frequency channel.

It should be noted that it might be obvious per se, to combine a known transceiver device with a known so-called scanner, which then randomly scans all possible frequency channels. Such known combination, however, never provides the guarantee that call information to be transmitted via the first frequency channel during the second time interval, is not lost the moment the scanner is scanning the second frequency channel. Furthermore, it is not customary to apply a scanner for scanning different types of frequency channels associated with two different systems, i.e., on the one hand a signalling channel which provides access to various speech channels, and on the other hand one or more direct speech channels. Of course from this known combination it is neither known, in dependence of system information received and detected via the first frequency channel, to temporarily tune to the second frequency channel, nor is it known from the known combination, to effect this tuning in such a manner in time that, only during at least a section of the first time interval, further information to be received via the second frequency channel is received and investigated.

A first embodiment of the transceiver device according to the invention is characterised in that the generating means comprise calculating means for, per at least four successive time intervals comprising two first time intervals and two second time intervals, generating the second control signal only once.

By applying the calculating means, the second control signal is generated only once per at least four successive time intervals comprising two first time intervals and two second time intervals, as a result of which the transceiver means is tuned to the second frequency channel only once per four such successive time intervals during at least a section of one first time interval. As a result, per four such successive time intervals at least one other first time interval remains for receiving, e.g., synchronisation information, so that the transceiver device need not fall out of synchronisation with the first system.

A second embodiment of the transceiver device according to the invention is characterised in that the transceiver device is provided with:
- analysing means coupled to the detection means for analysing information to be received via the transceiver means, and
- driving means coupled to the analysing means for driving the generating means for, in dependence of analysed further information, receiving further information to be received via the second frequency channel and via the transceiver means during at least a section of the second time interval.

By applying the analysing means, information to be received via the transceiver means is analysed, and by applying the driving means, the generating means are driven in such a manner that, as a function of further information received and analysed via the second frequency channel during at least a section of the first time interval, further information to be received via the second frequency channel during at least a section of the second time interval may, or may not, be received and analysed. As a result, more time becomes available for further call information to be transmitted via the second frequency channel since, when the transceiver device receives, during (at least a section of) the first time interval via the second frequency channel, the further information, or the further information of a certain type the transceiver means subsequently also remain tuned to the second frequency channel during (at least a section of) the second time interval, so that remaining further information can be received.

A third embodiment of the transceiver device according to the invention is characterised in that the analysing means comprise field-intensity measuring means for measuring the field intensity of the information to be received.

By applying the field-intensity measuring means, the field intensity is measured of information to be received, e.g., of the further information during the first time interval, whereupon, in the event of exceeding a predetermined value by this measured field intensity, the transceiver means remain tuned to the second frequency channel during the second time interval as well.

A fourth embodiment of the transceiver device according to the invention is characterised in that the analysing means comprise determining means for determining speech information and signalling information associated with further information to be received via the second frequency channel and via the transceiver means.

By applying the determining means, it is determined whether the further information to be received via the second frequency channel and via the transceiver means, is provided with speech information and/or signalling information. If the further information comprises signalling information, further call information destined for the transceiver device, which then should be analysed, might be present therein. If, on the other hand, the further call information comprises speech information, whilst no further call information has yet arrived via the second frequency channel for the transceiver device, such speech information is therefore not destined for this transceiver device, so that the transceiver means may again be tuned to the first frequency channel or, e.g., to a third frequency channel, etc.

The invention further relates to a method for optionally establishing a first communication connection from a first system to a transceiver device and a second telecommunication connection from a second system to the transceiver device, which method comprises the steps of:
- transmitting, by the first system via a first frequency channel, information,
- receiving, by the transceiver device via the first frequency channel, the information for establishing the first telecommunication connection,
- transmitting, by the second system via a second frequency channel, further information,
- receiving, by the transceiver device via the second frequency channel, the further information for establishing the second telecommunication connection.

Such method might be realised by combining a known transceiver device with a known scanner. Here, a further problem arises that, if the first frequency channel associated with the first system is a so-called signalling channel, with system information being transmitted during the first time interval and user information being capable of being transmitted during the second time interval, the investigation by the scanner of the second frequency channel associated with the second system might result in the missing of call information transmitted by the first system via the first frequency channel.

A further object of the invention is, inter alia, to provide a method of the type referred to above, in which the missing, during the investigation by the scanner of the second frequency channel associated with the second system, of the call information transmitted by the first sytem via the first frequency channel, is excluded.

For this purpose, the method according to the invention is characterised in that the method comprises the steps of:
- transmitting, by the first system via the first frequency channel during a
   first time interval, system information and transmitting, during a second time interval, user information,
- receiving, by the transceiver device via the first frequency channel during the first time interval, the system information and receiving, during the second time interval, the user information, and
- receiving, by the transceiver device under control of information to be received via the first frequency channel, further information to be received via the second frequency channel during at least a section of the first time interval.

By tuning, under control of information to be received via the first frequency channel, the transceiver means, during at least a section of the first time interval, to the second frequency channel for receiving the further information during at least a section of the first time interval, it is prevented that call information transmitted by the first system during the second time interval via the first frequency channel, is missed.

It should be noted that at least part of the inventiveness of the method according to the invention lies in the recognition of the further problem posed and in the definition of the further object. Furthermore, at least part of the inventiveness of the method according to the invention lies in overcoming the prejudice that it would be impossible to approach one and the same transceiver device from both a first system (which is based on effecting calls via a signalling channel and subsequently actually communicating via speech channels) and from a second system (which is based on speech channels by which the calls take place as well), without calls effected via the first system being lost.

A first embodiment of the method according to the invention is characterised in that the method comprises the steps of:
- only once receiving, by the transceiver device, per at least four successive time intervals comprising two first time intervals and two second time intervals, further information to be received via the second frequency channel during at least a section of the first time interval, and
- transmitting, by the second system via the second frequency channel, a number of call signals associated with the further information, each with a duration of at most half the first time interval, with the number of call signals at least having a total duration of the at least four successive time intervals.

By only once tuning, per at least four successive time intervals comprising two first time intervals and two second time intervals, the transceiver means to the second frequency channel, viz., during at least a section of one first time interval, there remains, per four said successive time intervals, at least one other first time interval for, e.g., receiving synchronisation information, so that the transceiver device need not fall out of synchronisation with the first system. By further having the second system transmit, via the second frequency channel, a number of call signals associated with the further information, each with a duration of at most half the first time interval, with the number of call signals at least having a total duration of the at least four successive time intervals, it is achieved that further call information transmitted by the second system via the second frequency channel always reaches the transceiver device. Of course, this is of great advantage.

A second embodiment of the method according to the invention is characterised in that the method comprises the step of:
- receiving, by the transceiver device in dependence of the further information to be received via the second frequency channel during at least a section of the first time interval, further information to be received via the second frequency channel during at least a section of the second time interval.

A third embodiment of the method according to the invention is characterised in that the method comprises the step of:
- measuring, by the transceiver device, the field intensity of information to be received.

A fourth embodiment of the method according to the invention is characterised in that the method comprises the step of:
- determining, by the transceiver device, speech information and signalling information associated with the further information to be received via the second frequency channel.

### C. REFERENCES

■ NL 9500192 (Dutch priority patent application)

All references are considered incorporated in this patent application.

### D. EXEMPLARY EMBODIMENT

The invention will be explained in greater detail by reference to an exemplary embodiment shown in the Figures in which:
FIG. 1 shows a transceiver device according to the invention, and
FIG. 2 shows three situations associated with a method according to the invention.

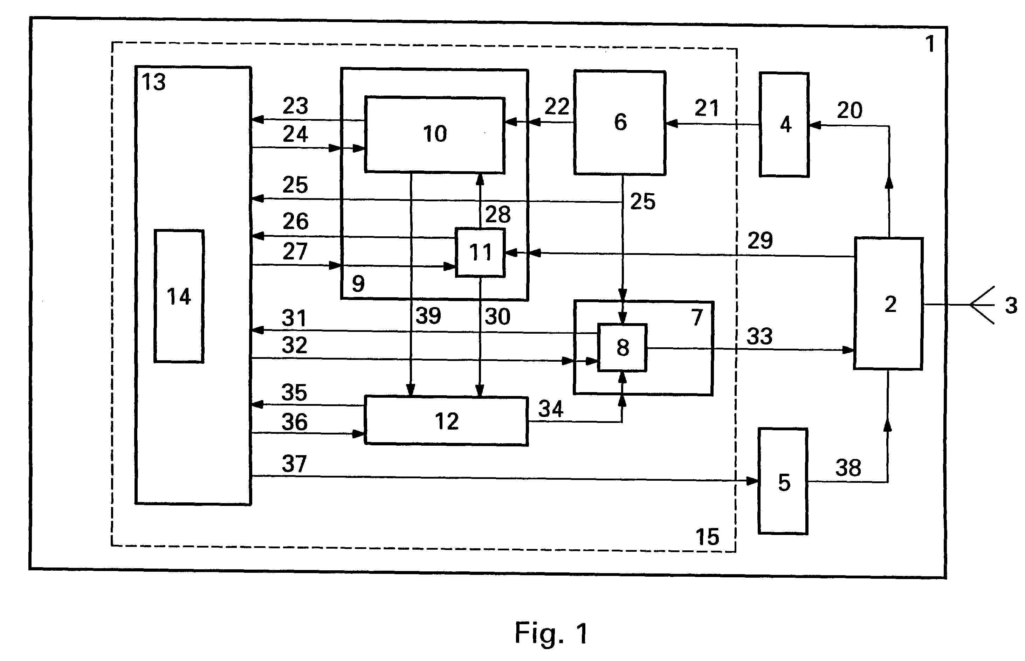

The transceiver device 1 according to the invention shown in FIG. 1 comprises transceiver means 2, 3 consisting of a transceiver 2 and an antenna 3 coupled to an antenna input/ output of transceiver 2. An output of transceiver 2 is connected, via a connection 20, to an input of a first converter 4 for converting information to be received via antenna 3 and transceiver 2 (such as, e.g., Frequency-shift Keying or FsK signals) into, e.g., binary pulse-shaped information. An output of first converter 4 is coupled, via a connection 21, to processor means 15 for supplying the binary pulse-shaped information to processor means 15. A control output of transceiver 2 is coupled, via a connection 29, to processor means 15 for supplying, to processor means 15, a field-intensity signal relating to the field intensity of the information to be received via antenna 3 and transceiver 2. A control input of transceiver 2 is coupled, via a connection 33, to processor means 15 for receiving, from processor means 15, a first control signal for transmitting/ receiving information via a first frequency channel and receiving a second control signal for transmitting/ receiving information via a second frequency channel. An input of transceiver 2 is connected, via a connection 38, to an output of a second converter 5 for converting, e.g., binary pulse-shaped information into information (such as, e.g., Frequency-shift Keying or FsK signals) to be transmitted via transceiver 2 and antenna 3. An input of second converter 5 is coupled, via a connection 37, to processor means 15. First converter 4 and second converter 5 are generally implemented jointly by applying a modulator-demodulator or modem known to those skilled in the art, and transceiver 2 and antenna 3 are components known to those skilled in the art which are already routinely present in certain radiotelephones and walkie-talkies.

Processor means 15 comprise detection means 6, of which:
- an input is coupled, via connection 21, to the output of first converter 4,
- an output is coupled, via a connection 22, to a first input of analysing means 9, and
- a control output is coupled, via a connection 25, to both a first control input of generating means 7 and to a processor 13, which comprises a memory 14.

Processor means 15 therefore further comprise analysing means 9, of which:
- a second input is coupled, via a connection 24, to processor 13,
- an output is coupled, via a connection 23, to processor 13,
- a first control input is coupled, via a connection 27, to processor 13,
- a second control input is coupled, via connection 29, to the control output of transceiver 2,
- a first control output is coupled, via a connection 26, to processor 13,
- a second control output is coupled, via a connection 39, to a first input of driving means 12, and
- a third control output is coupled, via a connection 30, to a second input of driving means 12.

Processor means 15 also comprise driving means 12, of which:
- a third input is coupled, via a connection 36, to processor 13,
- a first output is coupled, via a connection 35, to processor 13, and
- a second output is coupled, via a connection 34, to a second control input of generating means 7.

Processor means 15 further also comprise generating means 7, of which:
- a third control input is coupled, via a connection 32, to processor 13,
- a control output is coupled, via a connection 31, to processor 13, and
- an output is coupled, via connection 33, to the control input of transceiver 2.

Processor means 15 yet further comprise processor 13 which is coupled, via connection 37, to the input of second converter 5.

Analysing means 9 are provided with determining means 10, of which:
- a first input is coupled to the first input of analysing means 9,
- a second input is coupled to the second input of analysing means 9,
- an output is coupled to the output of analysing means 9,
- a control output is coupled to the second control output of analysing means 9, and
- a control input is coupled, via a connection 28, to a first output of field-intensity measuring means 11.

Analysing means 9 are further provided with field-intensity measuring means 11, of which:
- a second output is coupled to the first control output of analysing means 9,
- a third output is coupled to the third control output of analysing means 9,
- a first input is coupled to the first control input of analysing means 9, and
- a second input is coupled to the second control input of analysing means 9.

Generating means 7 are provided with calculating means 8, of which:
- a first input is coupled to the first control input of generating means 7,
- a second input is coupled to the second control input of generating means 7,
- a third input is coupled to the third control input of generating means 7,
- a first output is coupled to the control output of generating means 7, and
- a second output is coupled to the output of generating means 7.

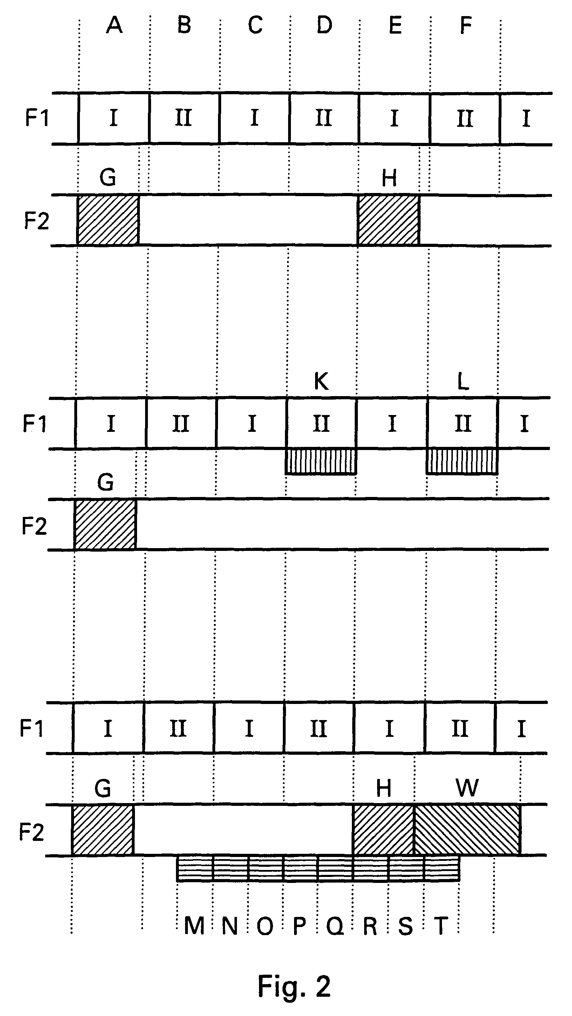

The operation of the transceiver device 1 shown in FIG. 1 will be explained in greater detail on the basis of the three situations shown in FIG. 2, associated with a method according to the invention, which method relates to optionally establishing a first telecommunication connection from a first system to transceiver device 1 and a second telecommunication connection from a second system to transceiver device 1.

The first situation, rendered as the top one in FIG. 2, shows six successive time intervals A, B, C, D, E and F, and a first frequency channel F1 and a second frequency channel F2. Via the first frequency channel F1 which, e.g., is a signalling channel, a first system during the first time intervals A, C and E always transmits system information indicated by I, and during the second time intervals B, D and F said first system may possibly, via the first frequency channel F1, transmit user information indicated by II. The system information relates to, e.g., synchronisation information and identification information of a transmitting base station, and the user information relates to, e.g., call information or channel-selection information for a certain transceiver device, such as, e.g., transceiver device 1, or acknowledgement information of a certain transceiver device. Such call information and channel-selection information and acknowledgement information of course always comprise identification information of the said transceiver device, such as, e.g., transceiver device 1. Actual communication, such as, e.g., exchange of speech and/or data between the first system and the said transceiver device then usually takes place via another frequency channel, such as, e.g., a third frequency channel F3 not shown in FIG. 2. Via the second frequency channel F2, which often is a speech channel, a second system may at random moments transmit further call information to a certain transceiver device, such as, e.g., transceiver device 1, whereafter the actual communication between the second system and the said transceiver device also takes place via said second frequency channel F2.

Generating means 7 generate the first control signal via their output and via connection 33, in response to which transceiver 2 is tuned to the first frequency channel F1. As a result, the system information transmitted in the time intervals A, C and E is received via antenna 3 and transceiver 2, which information reaches first converter 4 via connection 20, and which information after conversion reaches detection means 6 via connection 21. Detection means 6 detect said system information, with the synchronisation information, e.g., being recognised in the form of a synchronisation code and the identification information of a transmitting base station being passed on, via connection 22, to analysing means 9. Detection means 6 comprise, e.g., an internal clock-pulse generator which is synchronised, by way of a Phase Locked Loop or PLL circuit, with the first time intervals A, C and E, and which, around the start of every two successive time intervals A and B, and C and D, and E and F, generates a clock signal. It is also possible, however, that the internal clock-pulse generator of detection means 6 is implemented by generating, in response to the synchronisation code, the clock signal, which results in the drawback that part of the first time intervals A, C and E has then already elapsed.

Thus, detection means 6 generate the clock signal, which is supplied to generating means 7 via connection 25. Calculating means 8, which normally generate the first control signal, comprise, e.g., a counter in the form of a 2-divider, and an adjustable time-interval generator coupled thereto for generating the second control signal with a duration of, e.g., a section of the first time interval, which combination then generates the second control signal after each two pairs of elapsed time intervals during the section of the first time interval of the next pair of time intervals. As a result, during such sections transceiver 2 is tuned to the second frequency channel F2. Said sections are indicated by G and H in FIG. 2. As a result of all this, the transceiver device 1, at any rate during the second time intervals B, D and F, is tuned to the first frequency channel, so that any call information destined for transceiver device 1 and originating from the first system cannot be lost, whilst transceiver device 1 during a section G and H of some first time intervals A and E is tuned to the second frequency channel in order to be able to receive any further call information destined for transceiver device 1 and originating from the second system, but is not tuned to the second frequency channel during each first time interval (e.g., not during the first time interval C), so that transceiver device 1 continues to be synchronised to the first system. Here, transceiver device 1 becomes very accessible from both systems, particularly if the call information to be transmitted by the second system via the second frequency channel complies with certain conditions (namely, the transmission, by the second system via the second frequency channel, of a number of call signals associated with the further information, each with a duration of at most half the first time interval, with the number of call signals having a total duration of, in this example, at least four successive time intervals).

The second situation, indicated as the middle one in FIG. 2, again shows the six successive time intervals A, B, C, D, E and F, and the first frequency channel F1 and the second frequency channel F2. Via the first frequency channel F1 which, e.g., is a signalling channel, the first system during the first time intervals A, C and E always transmits system information indicated by I, and during the second time intervals B, D and F said first system via the first frequency channel F1 may possibly transmit user information indicated by II. In this example, actual user information is transmitted by the first system in the form of call information (comprising identification information of transceiver device 1) during the second time interval D. In FIG. 2, said call information is indicated by K.

Generating means 7 generate the first control signal via their output and via connection 33, in response to which transceiver 2 is tuned to the first frequency channel F1. As a result, the system information transmitted in the time intervals A, C and E is received via antenna 3 and transceiver 2, which information reaches first converter 4 via connection 20, and which information after conversion reaches detection means 6 via connection 21. Detection means 6 detect said system information, with the synchronisation information, e.g., being recognised in the form of a synchronisation code and with the identification information of a transmitting base station being passed on, via connection 22, to analysing means 9. Detection means 6 comprise, e.g., an internal clock-pulse generator which is synchronised, by way of a Phase Locked Loop or PLL circuit, with the first time intervals A, C and E, and which, around the start of every two successive time intervals A and B, and C and D, and E and F, generates a clock signal.

Thus, detection means 6 generate the clock signal, which is supplied to generating means 7 via connection 25. Calculating means 8, which normally generate the first control signal, comprise, e.g., a counter in the form of a 2-divider, and an adjustable time-interval generator coupled thereto for generating the second control signal with a duration of, e.g., a section of the first time interval, which combination then generates the second control signal after each two pairs of elapsed time intervals during the section of the first time interval of the next pair of time intervals. As a result, during such sections transceiver 2 is tuned to the second frequency channel F2. Such a section is indicated by G in FIG. 2.

During the second time interval D, the call information indicated by K is now transmitted by the first system via the first frequency channel. Via antenna 3 and transceiver 2, said call information transmitted in the second time interval D is received, which information reaches first converter 4 via connection 20, and which information after conversion reaches detection means 6 via connection 21. Detection means 6 detect said call information, e.g., because it lies in a second time interval, and pass it on to analysing means 9 via connection 22. Determining means 10 determine that said call information is destined for transceiver 1, e.g., in co-operation with processor 13 via connections 23 and 24, and, e.g., by recognising the identification information of transceiver device 1 associated with the call information in the form of an identification code, as being the identification code of transceiver device 1. Subsequently, determining means 10 generate a call-recognition signal and transmit it via connection 39 to driving means 12 which, in response thereto, transmit a deactivating signal via connection 34 to calculating means 8 which, in response to said deactivating signal, deactivate their counter in the form of the 2-divider. As a result, the time-interval generator associated with calculating means 8 generates no second control signal after termination of the second time interval D, as a result of which transceiver 2 therefore continues to be tuned to the first frequency channel F1 during the first time interval E.

During the second time interval F2, processor 13 (which is made aware of the timing in question via connection 25) generates so-called acknowledgement information, indicating in this manner that the call information was received and that transceiver 2 continues to be tuned to the first frequency channel F1, which acknowledgement information reaches second converter 5 via connection 37 and after conversion reaches transceiver 2 via connection 38, subsequently to be transmitted to the first system via antenna 3 and the first frequency channel F1. Said first system then transmits channel-selection information via the first frequency channel during a subsequent second time interval not shown in FIG. 2, comprising, e.g., the instruction to tune to a third frequency F3, whereafter actual communication, such as, e.g., exchange of speech and/or data between the first system and transceiver device 1, takes place via said third frequency channel F3 not shown in FIG. 2. For this purpose, the channel-selection information is received via antenna 3 and transceiver 2, and is passed on, via connection 20, to first converter 4, and after conversion via connection 21 is passed on via detection means 6. Detection means 6 detect said channel-selection information, e.g., because it is situated in a second time interval, and pass on said information via connection 22 to analysing means 9. Determining means 10 determine that said channel-selection information is destined for transceiver device 1, e.g., in co-operation with processor 13 via connections 23 and 24, and, e.g., by recognising the identification information of transceiver device 1 associated with the channel-selection information in the form of an identification code, as being the identification code of transceiver device 1. Subsequently, processor 13 generates a channel-tuning signal and transmits it via connection 32 to calculating means 8 of generating means 7 which, in response to said channel-tuning signal, deactivate their counter in the form of the 2-divider, and have their time-interval generator generate a third control signal. As a result, transceiver 2 is then tuned to the third frequency channel F3.

The third situation, indicated as the bottom one in FIG. 2, again shows the six successive time intervals A, B, C, D, E and F, and the first frequency channel F1 and the second frequency channel F2. Via the first frequency channel F1 which, e.g., is a signalling channel, the first system during the first time intervals A, C and E always transmits system information indicated by I, and during the second time intervals B, D and F said first system via the first frequency channel F1 may possibly transmit user information indicated by II. In this example, no user information is transmitted by the first system in the form of call information during the second time intervals B, D and F.

Generating means 7 generate the first control signal via their output and via connection 33, in response to which transceiver 2 is tuned to the first frequency channel F1. As a result, the system information transmitted in the time intervals A, C and E is received via antenna 3 and transceiver 2, which information reaches first converter 4 via connection 20, and which information after conversion reaches detection means 6 via connection 21. Detection means 6 detect said system information, with the synchronisation information, e.g., being recognised in the form of a synchronisation code and with the identification information of a transmitting base station being passed on, via connection 22, to analysing means 9. Detection means 6 comprise, e.g., an internal clock-pulse generator which is synchronised, by way of a Phase Locked Loop or PLL circuit, with the first time intervals A, C and E, and which, around the start of every two successive time intervals A and B, and C and D, and E and F, generates a clock signal.

Thus, detection means 6 generate the clock signal, which is supplied to generating means 7 via connection 25. Calculating means 8, which normally generate the first control signal, comprise, e.g., a counter in the form of a 2-divider, and an adjustable time-interval generator coupled thereto for generating the second control signal with a duration of, e.g., a section of the first time interval, which combination then generates the second control signal after each two pairs of elapsed time intervals during the section of the first time interval of the next pair of time intervals. As a result, during such sections transceiver 2 is tuned to the second frequency channel F2. Said sections are indicated by G and H in FIG. 2.

During a section of the second time interval B up to and including a section of the second time interval F, the further call information indicated by M up to and including T is now transmitted by the second system via the second frequency channel. Via antenna 3 and transceiver 2, a section of said further call information situated in the first time interval E is received (namely, the call signal R and a section of the call signal S), which section reaches first converter 4 via connection 20, and which section after conversion reaches detection means 6 via connection 21. Detection means 6 detect said section of said further call information, e.g., because it lies in a first time interval and clearly differs from the usual system information originating from the first system, and pass it on via connection 22 to analysing means 9. Determining means 10 determine that said further call information is destined for transceiver device 1, e.g., in co-operation with processor 13 via connections 23 and 24, and, e.g., by recognising the identification information of transceiver device 1 associated with the further call information in the form of an identification code, as being the identification code of transceiver device 1.

Subsequently, determining means 10 generate a call-recognition signal and transmit it via connection 39 to driving means 12 which, in response thereto, transmit a deactivating signal via connection 34 to calculating means 8 which, in response to said deactivating signal, deactivate their counter in the form of the 2-divider. As a result, the time-interval generator associated with calculating means 8 generates no first control signal after termination of the time interval H, as a result of which transceiver 2 therefore continues to be tuned to the second frequency channel F2 during the remainder of the first time interval E and the second time interval F, so that via said second frequency channel speech and/or data may be exchanged between the second system and transceiver device 1.

Because the first system and the second system are not mutually synchronised, the position of the call signals M up to and including T with respect to the first and second time intervals A up to and including F is completely random. For a perfect accessibility from both the first system and the second system, therefore, it is required that, of the number of call signals associated with the further information, each call signal has a duration of at most half the first time interval, whilst the number of call signals should have a total duration of, in this example, at least four successive time intervals.

Nonetheless, there is the possibility that a call signal lying unfavourably in a first time interval A, C or E, e.g., due to lack of time, cannot be detected by transceiver device 1. In this case, use should be made of field-intensity measuring means 11, namely, as follows.

During a section of the second time interval B up to and including a section of the second time interval F, the further call information indicated by M up to and including T is thus transmitted by the second system via the second frequency channel. Via antenna 3 and transceiver 2, a section of said further call information lying in the time interval H is received (namely, the call signal R and a section of the call signal S), which section reaches first converter 4 via connection 20, and which section after conversion reaches detection means 6 via connection 21. Detection means 6 detect said section of said further call information, e.g., because it lies in a first time interval and clearly differs from the usual system information originating from the first system, and pass it on via connection 22 to analysing means 9. Determining means 10 are unable, e.g., due to lack of time, to determine that said further call information is destined for transceiver device 1, but are informed via connection 28 of field-intensity measuring means 11 that, during the time interval H, a signal with a certain minimum field intensity was received via the second frequency channel F2.

Subsequently, determining means 10 generate a call-analysing signal and transmit it via connection 39 to driving means 12, and/or field-intensity measuring means 11 generate a further call-analysing signal and transmit it via connection 30 to driving means 12 which, in response thereto, transmit an adjustment signal by means of connection 34 to calculating means 8 which, in response to said adjustment signal, have their time-interval generator generate the second control signal for a more extensive period of time. The more extensive time interval obtained in this manner is indicated by H and W in FIG. 2. As a result, the time-interval generator associated with calculating means 8 therefore generates no first control signal after termination of the time interval H, as a result of which transceiver 2 therefore continues to be tuned to the second frequency channel F2 during the second time interval F. As a result, determining means receive more time to further investigate the signal received via the second frequency channel F2 for the presence of speech information or signalling information. If it involves only speech information present (no recognition by determining means 10), whilst prior to this there has not yet arrived any call information destined for transceiver device 1 via the second frequency channel, it is decided that the signal received is not destined for transceiver device 1, after which transceiver 2 is again tuned to the first frequency channel F1. If, on the other hand, it does involve signalling information (recognition by determining means 10), as is therefore the case in FIG. 2 given the call signals indicated by M up to and including T, determining means 10 generate a call-recognition signal and transmit it via connection 39 to driving means 12 which, in response thereto, transmit a deactivating signal via connection 34 to calculating means 8 which, in response to said deactivating signal, deactivate their counter in the form of the 2-divider. As a result, the time-interval generator associated with calculating means 8 generates no first control signal after termination of the time interval W, as a result of which transceiver 2 therefore continues to be tuned to the second frequency channel F2 during the subsequent time intervals, so that via said second frequency channel speech and/or data may be exchanged between the second system and transceiver device 1.

The field-intensity measuring means 11 located in analysing means 9 in FIG. 1 might be accommodated in transceiver 2 as well, with a digital code signal, e.g., then being transmitted from transceiver 2 to processor means 15. Such transceivers provided with field intensity measuring means are generally available. Furthermore, the section of determining means 10 which investigates the signal received via the second frequency channel for the presence of speech information or signalling information, might be implemented in the form of hardware by means of a carrier-wave detector or might be implemented in the form of software by means of carrier-wave detection means. Detection means 6 and determining means 10 might be implemented in the form of hardware by means of shift registers, comparators, logic gates and, e.g., table memories, but might of course also be implemented in the form of software. Generating means 7 comprising calculating means 8 might be implemented in the form of hardware by means of counters, (monostable) multivibrators and logic gates, but might also be implemented in the form of software. The first, second and third control signals to be generated by generating means 7 of course also relate to one control signal which may dispose of three values, etc. Driving means 12 might be implemented in the form of hardware by means of logic gates, but might also be implemented in the form of software. Processor 13 might take over certain functions from the means associated with processor means 15, which of course corresponds to implementing said means in the form of software.

Not shown in FIG. 1 are the microphone and loudspeaker routinely associated with a transceiver device, components which should be connected, respectively, via a switch to connection 37 or 38, and directly to connection 20 or 21. FIG. 1 therefore mainly relates to the signalling section of the transceiver device according to the invention and therefore to a lesser degree relates to the actual transmission/ reception by the transceiver of speech and/or data.

As described above, the first system is a so-called trunking system which via a signalling channel transmits and receives call information and acknowledgement information and channel-selection information, after which speech and/or data are subsequently exchanged via another channel indicated by the channel-selection information, whilst in the second system call information as well as speech and/or data are exchanged via the same channel. The transceiver device according to the invention and the method according to the invention are of course also applicable if the second system as well as the first system is a trunking system.

The first and second time intervals described above might have identical lengths as well as different lengths, and might be situated consecutively as well as non-consecutively. In the event of the unequal length and/or the non-consecutive position, the detection means and/or the generating means comprising the calculating means will become somewhat more complex in nature in a manner familiar to those skilled in the art.

The invention therefore relates to a receiver device (generally implemented as transceiver device) comprising:
- receiver means (generally implemented as transceiver means) for receiving (generally transmitting/ receiving), in response to a first control signal, information via a first frequency channel and for receiving (generally transmitting/ receiving), in response to a second control signal, information via a second frequency channel, and
- detection means coupled to the receiver means (generally implemented as transceiver means) for detecting, during a first time interval, system information to be received via the first frequency channel and via the receiver means (generally implemented as transceiver means) and detecting, during a second time interval, users' information to be received by means of the first frequency channel and by means of the receiver means (generally implemented as transceiver means), characterised in that the receiver device (generally implemented as transceiver device) is provided with:
- generating means coupled to the receiver means (generally implemented as transceiver means) and to the detection means for generating the second control signal in dependence of detected information for receiving, during at least a section of the first time interval, further information to be received via the second frequency channel and via the receiver means (generally implemented as transceiver means).

The invention therefore further relates to a method for optionally establishing a first telecommunication connection from a first system to a receiver device (generally implemented as transceiver device) and a second telecommunication connection from a second system to the receiver device (generally implemented as transceiver device), which method comprises the steps of:
- transmitting, by the first system via a first frequency channel, information,
- receiving, by the receiver device (generally implemented as transceiver device) via the first frequency channel, information for establishing the first telecommunication connection,
- transmitting, by the second system via a second frequency channel, further information,
- receiving, by the receiver device (generally implemented as transceiver device) via the second frequency channel, the further information for establishing the second telecommunication connection, characterised in that the method comprises the steps of:
- transmitting, by the first system via the first frequency channel during a first time interval, system information and transmitting, during a second time interval, user information,
- receiving, by the receiver device (generally implemented as transceiver device) via the first frequency channel during the first time interval, the system information and receiving, during the second time interval, the users' information, and
- receiving, by the receiver device (generally implemented as transceiver device) under control of information to be received via the first frequency channel, further information to be received via the second frequency channel during at least a section of the first time interval.

## Claims

1. Transceiver device comprising:
- transceiver means for transmitting/ receiving, in response to a first control signal, information via a first frequency channel and for transmitting/ receiving, in response to a second control signal, information via a second frequency channel, and
- detection means coupled to the transceiver means for detecting, during a first time interval, system information to be received via the first frequency channel and via the transceiver means and for detecting, during a second time interval, users' information to be received via the first frequency channel and via the transceiver means,
characterised in that the transceiver device is provided with:
- generating means coupled to the transceiver means and to the detection means for generating the second control signal in dependence of detected information for receiving, during at least a section of the first time interval, further information to be received via the second frequency channel and via the transceiver means.

2. Transceiver device according to claim 1, characterised in that the generating means comprise calculating means for only once per at least four successive time intervals comprising two first time intervals and two second time intervals generating the second control signal.

3. Transceiver device according to claim 1 or 2, characterised in that the transceiver device is provided with:
- analysing means coupled to the detection means for analysing information to be received via the transceiver means, and
- driving means coupled to the analysing means for driving the generating means for, in dependence of analysed further information, receiving further information to be received via the second frequency channel and via the transceiver means during at least a section of the second time interval.

4. Transceiver device according to claim 3, characterised in that the analysing means comprise field-intensity measuring means for measuring the field intensity of information to be received.

5. Transceiver device according to claim 3 or 4, characterised in that the analysing means comprise determining means for determining speech information and signalling information associated with further information to be received via the second frequency channel and via the transceiver means.

6. Method for optionally establishing a first telecommunication connection from a first system to a transceiver device and a second telecommunication connection from a second system to the transceiver device, which method comprises the steps of:
- transmitting, by the first system via a first frequency channel, information,
- receiving, by the transceiver device via the first frequency channel, the information for establishing the first telecommunication connection,
- transmitting, by the second system via a second frequency channel, further information,
- receiving, by the transceiver device via the second frequency channel, the further information for establishing the second telecommunication connection,
characterised in that the method comprises the steps of:
- transmitting, by the first system via the first frequency channel during a
first time interval, system information and transmitting, during a second time interval, user information,
- receiving, by the transceiver device via the first frequency channel during the first time interval, the system information and, during the second time interval, the user information, and
- receiving, by the transceiver device under control of information to be received via the first frequency channel, further information to be received via the second frequency channel during at least a section of the first time interval.

7. Method according to claim 6, characterised in that the method comprises the steps of:
- only once receiving, by the transceiver device per at least four successive time intervals comprising two first time intervals and two second time intervals, further information to be received via the second frequency channel during at least a section of the first time interval, and
- transmitting, by the second system via the second frequency channel, a number of call signals associated with the further information, each with a duration of at most half the first time interval, with the number of call signals at least having a total duration of the at least four successive time intervals.

8. Method according to claim 6 or 7, characterised in that the method comprises the step of:
- receiving, by the transceiver device in dependence of the further information to be received via the second frequency channel during at least a section of the first time interval, further information to be received via the second frequency channel during at least a section of the second time interval.

9. Method according to claim 8, characterised in that the method comprises the step of:
- measuring, by the transceiver device, the field intensity of information to be received.

10. Method according to claim 8 or 9, characterised in that the method comprises the step of:
- determining, by the transceiver device, speech information and signalling information associated with further information to be received via the second frequency channel.
